# EUROPEAN PATENT APPLICATION

(11) **EP 4 693 706 A2**
(43) Date of publication of application: **11.02.2026**
(21) Application number: 24785336.9
(22) Date of filing: 05.04.2024
(51) Int. Cl.: H01M 50/543, H01M 50/552, H01M 50/564, H01M 50/102

(54) **BATTERY CELL**

(30) Priority: 06.04.2023 KR 20230045063
(71) Applicant: SK On Co., Ltd., Seoul 03161 (KR)
(72) Inventor: SHIN, Jae Sik, Daejeon 34124 (KR); JU, Seung Hoon, Daejeon 34124 (KR); BYUN, Jae Gyu, Daejeon 34124 (KR); SEO, Gi Jeong, Daejeon 34124 (KR)
(74) Representative: Prüfer & Partner mbB Patentanwälte · Rechtsanwälte
(86) International application number: PCT/KR2024/004552
(87) International publication number: WO 2024/210639

(57) **Abstract**

This disclosure relates to a battery cell comprising a case including a case body forming a receiving space and at least one cap plate, an electrode assembly received within the receiving space, and a terminal assembly coupled to the at least one cap plate, wherein the terminal assembly may include a current collecting member electrically connected to the electrode assembly with a through hole formed therein and a terminal inserted into the through hole and in contact with the current collecting member.

## Description

### [Field]

This disclosure relates to a battery cell, specifically a battery cell including a terminal.

### [Background technology]

A battery cell may include an electrode assembly, a current collecting member connected to the electrode assembly, and a terminal connecting the current collecting member to an external device. The electrode assembly is a secondary battery that repeatedly performs charging and discharging.

The terminal and the current collecting member may be joined by welding. In this case, the welding typically employs either seam welding or spot welding. Here, the non-welded or non-joined portion has relatively higher electrical resistance compared to the welded portion, having a problem of weak electrical connection. In this case, current flow concentrates at the welded portion, which has relatively lower electrical resistance, potentially causing heat to concentrate at the welded portion. Therefore, the welded portion may be structurally weak due to a thermal stress.

### [Detailed Description of the Invention]

### [Technical Problem]

First, this disclosure aims to provide a battery cell with improved stability.

Second, this disclosure aims to increase the contact area between the current collecting member and the terminal.

Third, this disclosure aims to reduce electrical resistance between the current collecting member and the terminal and minimize heat generation.

Fourth, this disclosure aims to mechanically join the current collecting member and the terminal instead of using conventional welding methods.

Meanwhile, the battery cell according to this disclosure may be widely applied in the fields of electric vehicles, battery charging stations, energy storage systems, and other green technologies such as photovoltaics and wind power that utilize battery cells. Furthermore, the battery cell according to this disclosure may be used in eco-friendly mobility, including electric vehicles and hybrid vehicles, which suppress air pollution and greenhouse gas emissions to prevent climate change.

### [Technical solutions]

A battery cell according to an embodiment of the present disclosure may comprise: a case including a case body forming a receiving space and at least one cap plate, an electrode assembly received within the receiving space, and a terminal assembly coupled to the at least one cap plate, wherein the terminal assembly may include a current collecting member electrically connected to the electrode assembly with a through hole formed therein and a terminal inserted into the through hole and in contact with the current collecting member.

In an embodiment, the terminal may include a terminal head in contact with the current collecting member and a terminal pin extended from the terminal head toward the cap plate and inserted into the through hole.

In an embodiment, the terminal further may include a fixing pin disposed on the terminal head along a circumference of the terminal pin.

In an embodiment, the fixing pin may be provided spaced apart from the outside of the terminal pin so as to surround the terminal pin centered on the terminal pin.

In an embodiment, the fixing pin may be disposed in an arc shape centered on the terminal pin in viewing from the cap plate.

In an embodiment, a diameter of the through hole may be equal to or larger than a diameter of a pin structure including the terminal pin and the fixing pin.

In an embodiment, at least a portion of the terminal head may include a recession that is positioned radially away from the terminal pin than the fixing pin centered on the terminal pins and is recessed away from the cap plate.

In an embodiment, the recession may include a section in which a vertical length gradually increases toward the outer direction of the terminal head.

In an embodiment, the current collecting member may include a peripheral portion of the through hole and a plate, wherein the peripheral portion of the through hole may come into contact with the terminal head when the terminal pin and the fixing pin are inserted into the through hole.

In an embodiment, the battery cell further may comprise: a recession positioned radially away from the terminal pin than the fixing pin centered on the terminal pins and recessed away from the cap plate, wherein the peripheral portion of the through hole may be positioned between the fixing pin and the recession.

In an embodiment, the fixing pin may be bent outward to contact with a top of the peripheral portion of the through hole when the terminal pin and the fixing pin are inserted into the through hole.

In an embodiment, when the terminal pin may be inserted into a hole of the pressing portion, wherein the fixing pin may be bent outward to contact with the top of the peripheral portion of the through hole due to the pressing of the pressing portion.

In an embodiment, a diameter of the pressing portion may be smaller than a diameter of a pin structure including the terminal pin and the fixing pin, and may be equal to or larger than a diameter of the fixing pin.

In an embodiment, the terminal pin may be connected to the center portion of the terminal head.

In an embodiment, the terminal further may include a fixing pin connected to a center periphery portion of the terminal head, and the fixing pin may be bent to contact with the top surface of the current collecting member when the fixing pin and the terminal pin are inserted into the through hole.

In an embodiment, the terminal head may include a recession connected to the outer end of the center periphery portion and an outer connecting portion connected to the outer end of the recession.

In an embodiment, a vertical length of the recession may be smaller than a vertical length of the outer connecting portion.

In an embodiment, a diameter of the terminal head may be larger than a diameter of the through hole.

A battery assembly according to another embodiment of the present disclosure may comprise the battery cell and a receiving space for receiving the battery cell.

### [Effect]

First, according to an embodiment of the present disclosure, a battery cell with improved stability may be provided.

Second, according to an embodiment of the present disclosure, the electrical resistance of the terminal may be improved, and the thermal behavior may be improved.

Third, according to an embodiment of the present disclosure, the terminal and the current collecting member may be joined using a mechanical method instead of welding.

Fourth, according to the embodiment of the present disclosure, the manufacturing process of the battery cell may be simplified and manufacturing costs may be reduced.

### [Description of the drawing]

FIG. 1a is a drawing illustrating a battery cell according to an embodiment.
FIG. 1b is a drawing illustrating a terminal assembly according to an embodiment.
FIGS. 2a and 2b are drawings illustrating the current collecting member and terminal according to an embodiment.
FIGS. 3a to 3c are cross-sectional views illustrating the connection of the current collecting member and terminal according to an embodiment.
FIG. 4 is a plan view of the terminal according to an embodiment.

### [Embodiments]

The structural or functional descriptions of the embodiments disclosed in this specification or application are provided merely as examples to illustrate embodiments of the technical concept of the present disclosure. Embodiments of the technical concept of the present disclosure may be implemented in various forms beyond the embodiments disclosed in this specification or application, and the technical concept of the present disclosure shall not be interpreted as being limited to the embodiments described herein or in the application.

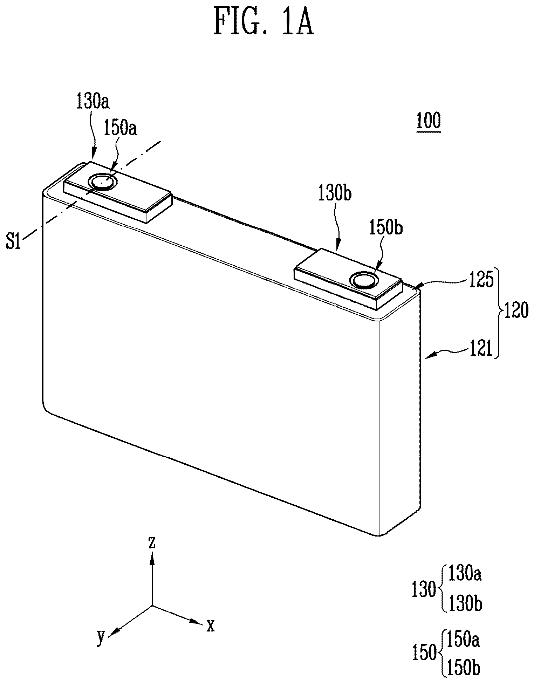

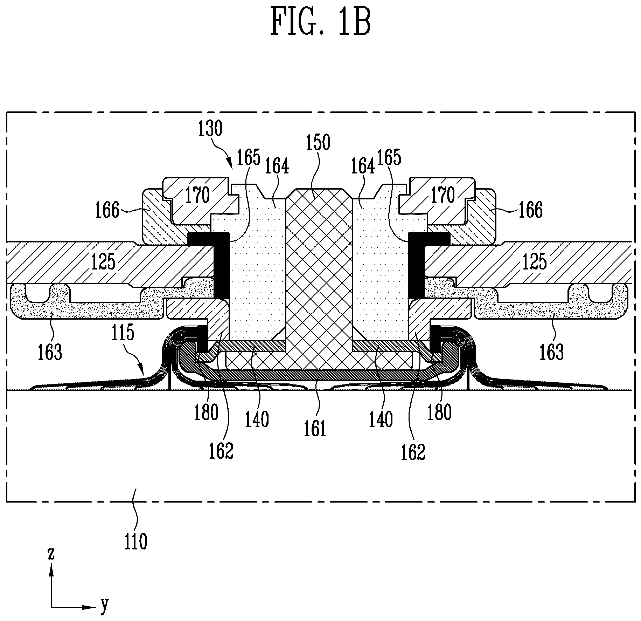

FIG. 1a is a drawing illustrating a battery cell according to an embodiment. FIG. 1b is a drawing illustrating a terminal assembly according to an embodiment. FIG. 1b illustrates a cross-section S1 of the terminal assembly in FIG. 1a.

Referring to FIGS. 1a and 1b, a battery cell 100 according to an embodiment includes a case 120 including a case body 121 forming a receiving space (not shown) and at least one cap plate 125, an electrode assembly 110 received within the receiving space, and a terminal assembly 130 coupled to the at least one cap plate 125. For example, the battery cell 100 may be a lithium-ion battery, but is not limited thereto and may be modified into various types of batteries.

The electrode assembly 110 may include electrodes, a separator, and lead tabs 115. The electrodes may include a positive electrode and a negative electrode. The separator may be an insulator having electrical insulating properties. The lead tabs 115 may include a positive electrode lead tab and a negative electrode lead tab. The positive electrode lead tab may be electrically connected to the positive electrode, and the negative electrode lead tab may be electrically connected to the negative electrode. For example, the electrode assembly 110 may be a laminate in which electrodes (e.g., a negative electrode and a positive electrode) are disposed on both sides of the separator, and lead tabs are connected to the electrodes.

The electrode assembly 110 may be placed within the receiving space of the case 120. The receiving space refers to a space formed inside the case 120. The electrode assembly 110 is positioned within the receiving space, and the case 120 may serve to protect the electrode assembly 110 from external impacts and vibrations. The electrode assembly 110 may further include an electrolyte. For example, the electrolyte may be a material that enables the movement of lithium ions. The electrolyte may be a material in a liquid or solid state.

The case 120 may be a structure forming an internal receiving space. For example, the case 120 may have a shape such as a hollow hexahedron or cylinder. The material of the case 120 may be aluminum or an aluminum alloy, but is not limited thereto and may be implemented using various materials.

The case 120 may include a case body 121 and at least one cap plate 125. For example, the number of at least one cap plate 125 may be one or two.

The case body 121 may form a receiving space with at least one open side. For example, the at least one open side may be the top surface and/or the bottom surface. After the electrode assembly 110 is placed in the receiving space, the open side may be sealed by a cap plate 125 coupled to the case body 121.

Considering that the case body 121 accommodates the electrode assembly 110 along with an electrolyte, it is desirable that at least one open surface among the surfaces of the case body 121 be located at the top.

The cap plate 125 may be coupled to the case body 121. For example, after the electrode assembly 110 is received within the receiving space inside the case body 121, the cap plate 125 may be coupled to the case body 121 to seal the receiving space. In this case, the cap plate 125 may be coupled to the case body 121 using coupling methods such as bolts, welding, clamps, or protrusions.

The cap plate 125 may be coupled to the terminal assembly 130. For example, a hole may be formed in the cap plate 125. The terminal assembly 130 may be inserted into the hole in the cap plate 125, thereby coupling the cap plate 125 to the terminal assembly 130.

In an embodiment, the case body 121 may form a receiving space with one open side. For example, the one open side may be the top surface. The electrode assembly 110 may be inserted through the top surface and received within the receiving space. Then, one cap plate 125 may be coupled to the case body 121 to seal the open top surface of the receiving space. In this case, two terminal assemblies 130 may be coupled to one cap plate 125.

In another embodiment, the case body 121 may form a receiving space with two open sides. For example, the two open sides may be the top surface and the bottom surface. The electrode assembly 110 may be inserted through the top surface or the bottom surface and received within the receiving space. Furthermore, two cap plates 125 may be coupled to the case body 121 to seal the open top and bottom surfaces of the receiving space. In this case, one terminal assembly 130 may be coupled to one cap plate 125.

The terminal assembly 130 may be coupled to the cap plate 125. The terminal assembly 130 is a structure for electrically connecting the electrode assembly 110 to an external device. The terminal assembly 130 may be distinguished as either a first terminal assembly 130a or a second terminal assembly 130b. Depending on the polarity of the lead tab 115 of the electrode assembly 110, one of the first terminal assembly 130a and second terminal assembly 130b may be a positive terminal assembly, and the other may be a negative terminal assembly. Similarly, the terminal 150 is distinguished as either the first terminal 150a or the second terminal 150b, and one of the first terminal 150a and the second terminal 150b may be a positive terminal, and the other may be a negative terminal.

The terminal assembly 130 is electrically connected to the electrode assembly 110 and includes a current collecting member 140 with a through hole 145 formed therein and a terminal 150 inserted into the through hole 145 in contact with the current collecting member 140.

The current collecting member 140 may be electrically connected to the electrode assembly 110. For example, the current collecting member 140 may be electrically connected to the lead tab 115 by contacting the lead tab 115.

The terminal 150 may be electrically connected to the current collecting member 140. Specifically, the terminal 150 may be in contact with the current collecting member 140, enabling a direct electrical connection. Therefore, the current collecting member 140 and the terminal 150 may be conductive metals.

The terminal 150 may be electrically connected to an external device. The terminal 150 may be electrically connected to the electrode assembly 110 via the current collecting member 140. That is, the external device may be electrically connected to the electrode assembly 110 via the terminal 150 and the current collecting member 140. Here, the external device may be various devices such as another battery cell, a sensing device, or a battery management system.

In an embodiment, the terminal assembly 130 may further include a first insulator 161, an insulating socket 162, a second insulator 163, a rivet 164, a third insulator 165, a fourth insulator 166, a terminal plate 170, and a welded portion 180.

For example, the first insulator 161, insulating socket 162, second insulator 163, third insulator 165, and fourth insulator 166 may be structures possessing electrical insulating or high-resistance characteristics. For example, the rivet 164, terminal plate 170, and welded portion 180 may be structures having electrical conductivity.

The first insulator 161 may be positioned between the electrode assembly 110 and the terminal 150. The side end of the first insulator 161 may be positioned between the lead tab 115 of the electrode assembly 110 and the current collecting member 140. The first insulator 161 may block a direct electrical connection between the lead tab 115 of the electrode assembly 110 and the terminal 150.

The insulating socket 162 is a structure for securing the rivet 164. The insulating socket 162 and the second insulator 163 may block a direct electrical connection between the lead tab 115 of the electrode assembly 110 and the cap plate 125.

The rivet 164 can secure the current collecting member 140 and the terminal 150. For example, the rivet 164 may be inserted into a space within the upper portion of the current collecting member 140, between the outside of the terminal pin of the terminal 150 and the inside of the insulating socket 162.

A third insulator 165 may block direct electrical connection between the rivet 164 and the cap plate 125. For example, the third insulator 165 may be positioned between the rivet 164 and the cap plate 125. A fourth insulator 166 may block a direct electrical connection between the cap plate 125 and the terminal plate 170. For example, the fourth insulator 166 may be positioned between the cap plate 125 and the terminal plate 170.

A welded portion 180 may be formed between the lead tab 115 and the current collecting member 140 by welding. The welded portion 180 may electrically connect the lead tab 115 and the current collecting member 140 to each other.

Hereinafter, the method and structure by which the current collecting member 140 is joined to the terminal 150 will be described in detail with reference to the attached drawings.

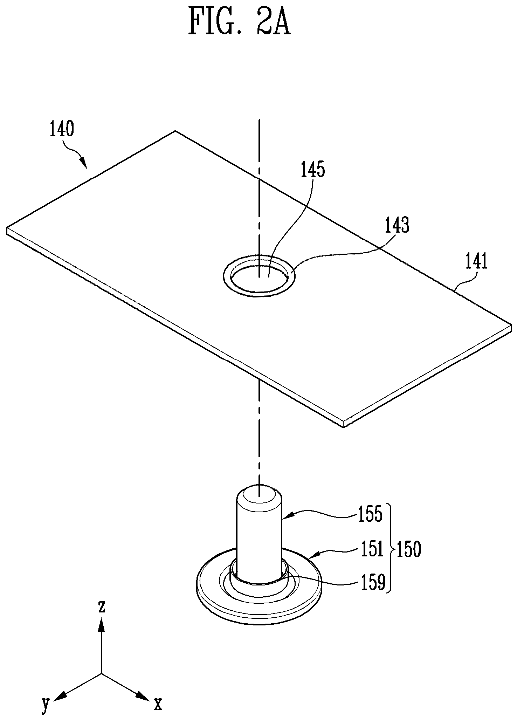

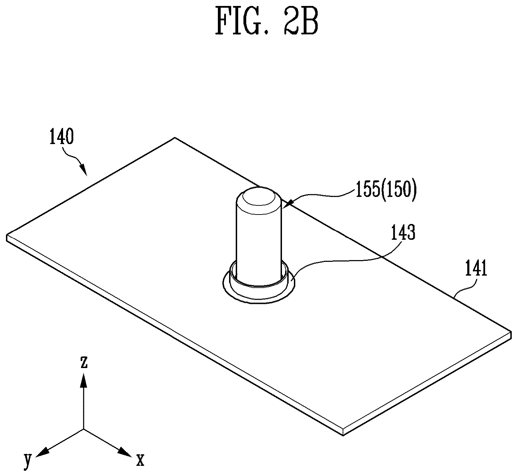

FIGS. 2a and 2b are drawings illustrating the current collecting member and terminal according to an embodiment. FIG. 2a shows the state before the current collecting member and terminal are joined, and FIG. 2b shows the state after the collector member and terminal are joined with each other.

Referring to FIGS. 2a and 2b, the current collecting member 140 may include a through hole 145 formed by penetrating the current collecting member 140. That is, the current collecting member 140 may include a through hole 145 penetrating the current collecting member 140 in a direction facing the cap plate 125. The through hole 145 is an area for insertion of the terminal pin 155 of the terminal 150 and may be an open area.

In an embodiment, the current collecting member 140 may include a plate 141 and a peripheral portion 143 of the through hole 145. The plate 141 may be an area contacting the terminal head 151 of the terminal 150. The peripheral portion 143 of the through hole 145 may be the area surrounding the through hole 145.

For example, the peripheral portion 143 of the through hole may be defined as the region within a reference distance from the through hole 145. The reference distance will be greater than the radius of the through hole 145. The shape of the through hole 145 may be the same as the shape of the terminal pin 155 of the terminal 150. For example, the shape of the through hole 145 may be circular, but this is only one embodiment and may be modified into various shapes.

The terminal 150 may include a terminal head 151, a terminal pin 155, and a fixing pin 159. The terminal head 151 may be connected to the terminal pin 155 and the fixing pin 159.

The terminal pin 155 may be a cylindrical shape extending from a surface of the terminal head 151 toward the cap plate 125. Preferably, the terminal pin 155 may be connected to the center portion of the terminal head 151. Furthermore, the diameter of the terminal head 151 may be larger than the diameter of the terminal pin 155.

A fixing pin 159 may be connected to a center peripheral portion of the terminal head 151. The center peripheral portion of the terminal head 151 may be the region located outside the center portion where the terminal pin 155 is positioned, within a predetermined distance from the center of the center portion.

That is, the fixing pin 159 may be formed on the terminal head 151 in a shape surrounding the terminal pin 155. The vertical direction length of the fixing pin 159 may be smaller than the vertical direction length of the terminal pin 155. The vertical direction length may be the length in the z-axis direction.

The terminal 150 may be manufactured through various methods such as casting, forging, or extrusion. In an embodiment, the terminal head 151 and the terminal pin 155 may be formed integrally.

Preferably, the fixing pin 159 may also be manufactured as an integral part.

The terminal 150 and the current collecting member 140 may be mechanically contacted or joined.

In an embodiment, the terminal pin 155 of the terminal 150 is inserted into the through hole 145 of the current collecting member 140, and the current collecting member 140 is compressed and coupled to the terminal 150.

Specifically, referring to FIG. 2a, the current collecting member 140 may be aligned on top of the terminal 150 such that the terminal pin 155 and the fixing pin 159 of the terminal 150 are inserted into the through hole 145 of the current collecting member 140.

The fixing pin 159 may be provided spaced apart from the outside of the terminal pin 155 so as to surround the terminal pin 155 centered on the terminal pin 155.

The height of the fixing pin 159 relative to the terminal head 151 will be lower than the height of the terminal pin 155. Furthermore, the height of the fixing pin 159 may be larger than the thickness of the current collecting member 140.

Meanwhile, the fixing pin 159 may be disposed in an arc shape centered on the terminal pin 155 in viewing from the cap plate 125. That is, the fixing pin 159 may be provided as a plurality of pins that do not form a single continuous line but instead surround only a portion of the terminal pin 155.

Considering that the terminal pin 155 and the fixing pin 159 are inserted into the through hole 145, the diameter of the through hole 145 may be equal to or larger than the diameter of the pin structure including the terminal pin 155 and the fixing pin 159.

The through hole 145 may preferably be circular. This is for convenience of assembly and to account for stress. Similarly, the terminal pin 155 may also be provided in a cylindrical shape.

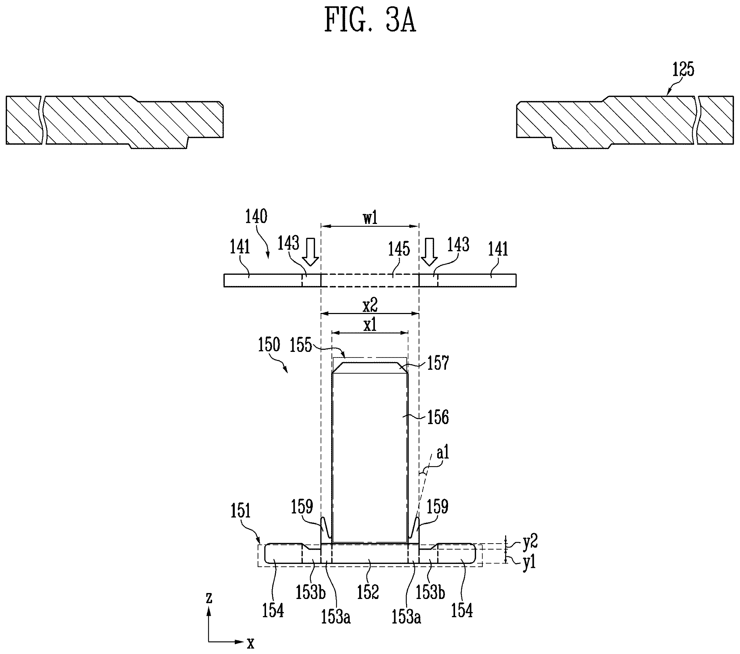

Referring to FIG. 2b, the current collecting member 140 may be compressed and moved downward. As a result, the current collecting member 140 may be brought into close contact with the terminal 150. Subsequently, to prevent the current collecting member 140 from separating from the terminal 150, the fixing pin 159 may be bent to secure the current collecting member 140. This is described in detail with reference to FIGS. 3a to 3c.

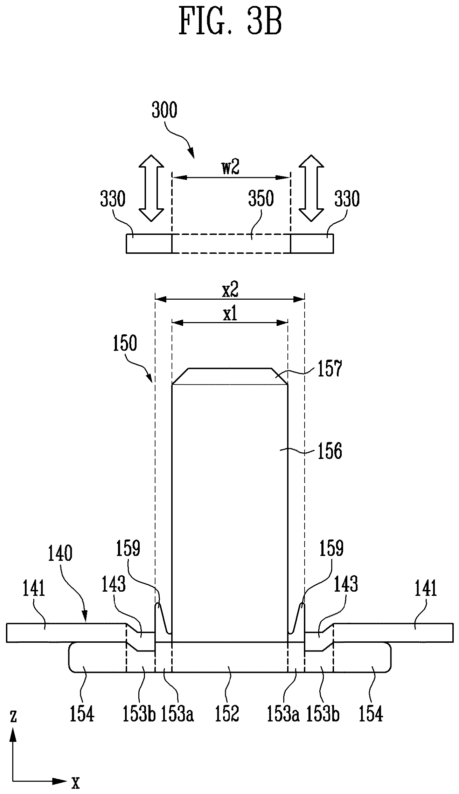

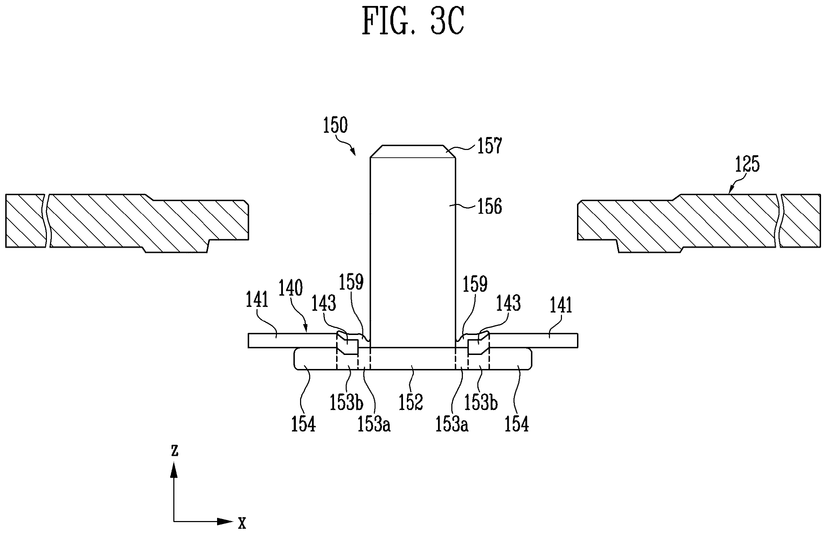

FIGS. 3a to 3c are cross-sectional views illustrating the connection of the current collector member and terminal according to an embodiment. FIG. 3a shows the state before the current collecting member and the terminal are joined, FIG. 3b shows the state after the current collecting member and the terminal are joined, and FIG. 3c shows the state where the terminal's fixing pin is bent.

Referring to FIGS. 3a to 3c, the current collecting member 140 may include a plate 141, a peripheral portion 143 around a through hole 145, and the through hole 145. The terminal 150 may include a terminal head 151, a terminal pin 155, and a fixing pin 159.

In an embodiment, the terminal head 151 may include a center portion 152, a center peripheral portion 153a, a recession 153b, and an outer connecting portion 154. In an embodiment, the terminal pin 155 may include a pin member 156 and a dog point 157.

The center portion 152 may be connected to the lower end of the pin member 156 of the terminal pin 155.

The center peripheral portion 153a may be connected to the outer end of the center portion 152. The center peripheral portion 153a may be connected to the lower end of the fixing pin 159.

The recession 153b may be connected to the outer end of the center peripheral portion 153a. The outer connecting portion 154 may be connected to the outer end of the recession 153b. When the current collecting member 140 is compressed, the peripheral portion 143 around the through hole of the current collecting member 140 may contact the recession 153b, and the plate 141 of the current collecting member 140 may contact the outer connecting portion 154.

In an embodiment, the vertical length y1 of the recession 153b may be smaller than the vertical length of the outer connecting portion 154. For example, the vertical direction length may be the length in the z-axis direction. That is, the vertical direction length of the outer connecting portion 154 may be the sum of the vertical direction length y1 of the recession 153b and a reference length y2.

In an embodiment, the recession 153b may include a section where the vertical length gradually increases toward the outer direction. Here, the outer direction may be the direction extending from the center portion 152 toward the outer connecting portion 154. For example, the recession 153b may include a section where the vertical length increases by the reference length y2 as it extends in the outer direction. Accordingly, when the current collecting member 140 is coupled to the terminal 150 by compressing, a technical effect may be achieved whereby no air gap exists between the peripheral portion 143 of the through hole and the recession 153b.

The pin member 156 may be positioned on the top of the terminal head 151. For example, the bottom of the pin member 156 may be connected to the top of the center portion 152 of the terminal head 151.

The pin member 156 may be a portion inserted into the through hole 145. For example, the pin member 156 may have a cylindrical shape. In this case, the vertical cross-sectional shape of the pin member 156 may be circular. Here, the vertical cross-sectional shape denotes the shape of a cross-section taken in the vertical direction. For example, the vertical direction may be the z-axis direction.

The dog point 157 may be positioned at the top of the pin member 156. For example, the bottom of the dog point 157 may be connected to the top of the pin member 156. The dog point 157 may protrude in the vertical direction such that its horizontal length decreases. For example, the horizontal length may be the diameter. For example, the vertical direction may be the +z-axis direction. That is, the dog point 157 may have a horizontal length that decreases from the bottom to the top. The dog point 157 may be the portion inserted into the through hole 145 before the pin member 156. The dog point 157 may function as a guide member facilitating insertion of the pin member 156.

The fixing pin 159 is a structural member for fixing the current collecting member 140.

The lower end of the fixing pin 159 may be connected to the top of the center peripheral portion 153a of the terminal head 151. In an embodiment, the inner end of the fixing pin 159 may be connected to the outer end of the pin member 156 of the terminal pin 155. However, this is only one embodiment, the inner end of the fixing pin 159 may be modified and implemented without being connected to the outer end of the pin member 156 of the terminal pin 155.

In an embodiment, the separation distance between the fixing pin 159 and the pin member 156 may increase in the upward direction. The upward direction may be the z-axis direction. For example, the separation distance may be the distance between the inner end of the fixing pin 159 and the outer end of the pin member 156. The separation distance may increase in the upward direction according to the separation angle a1. The separation angle a1 may be varied and implemented with different values.

The fixing pin 159 may be bent by compression. That is, the fixing pin 159 may be deformed in shape by compression. The bent fixing pin 159 may contact the top of the current collecting member 140.

In an embodiment, the diameter w1 of the through hole 145 in the current collecting member 140 may be equal to or larger than the diameter x2 of the pin structure of the terminal 150. Here, the pin structure may include the terminal pin 155 and the fixing pin 159. The diameter may be the length in the x-axis direction.

A pin structure including the terminal pin 155 and the fixing pin 159 may be inserted into the through hole 145.

Specifically, FIGS. 3a and 3c only schematically illustrate the relative positions between the terminal 150, the current collecting member 140, and the cap plate 125. Referring to FIGS. 3a and 3c, it may be seen that the terminal 150 is inserted into the current collecting member 140 through the through hole 145 of the current collecting member 140 and extends toward the cap plate 125. Therefore, the terminal 150 may contact the current collecting member 140. Alternatively, the terminal 150 may be positioned spaced apart from a hole provided in the cap plate 125.

Furthermore, after insertion, the terminal head 151 will contact the bottom surface of the current collecting member 140, and a portion including the free end of the fixing pin 159 will be bent to contact the top surface of the current collecting member 140. The top surface of the current collecting member 140 refers to the surface of the current collecting member 140 facing the cap plate 125. Conversely, the lower surface of the current collecting member 140 refers to the surface of the current collecting member 140 located in the opposite direction from the top surface. That is, it refers to the surface contacting the terminal head 151.

Referring to FIGS. 3a and 3b, the current collection member 140 or terminal 150 may be aligned such that the through hole 145 is positioned on the pin structure. Subsequently, the pin structure may be inserted into the through hole 145. Here, the pin structure may include a terminal pin 155 and a fixing pin 159.

With the pin structure inserted into the through hole 145, the periphery portion 143 of the through hole may be pressed to contact the top of the recession 153b. Here, pressing refers to applying high pressure using a press device, and the pressing may deform the shape of the peripheral portion 143 of the through hole. For example, as shown in FIGS. 3a and 3b, the peripheral portion 143 of the through hole may be deformed to closely fit the recession 153b.

Referring to FIGS. 3b and 3c, the fixing pin 159 may be bent by the pressing of the press device 300. The press device 300 can include a pressing portion 330 and a hole 350.

In an embodiment, the diameter w2 of the hole 350 in the pressing portion 330 may be equal to or larger than the diameter of the fixing pin 159 and smaller than the diameter x2 of the pin structure. The diameter of the fixing pin 159 may be the difference between the diameter x2 of the pin structure and the diameter x1 of the pin member 156. Accordingly, the fixing pin 159 may be compressed by the pressing portion 330.

In an embodiment, the fixing pin 159 may be bent so that, when the terminal pin 155 is inserted into the hole 350 of the pressing portion 330, it contacts the top of the peripheral portion 143 of the through hole due to the pressing of the pressing portion 330. Here, the outward direction may be the direction away from the pin member 156.

In this case, the peripheral portion 143 of the through hole may be positioned between the fixing pin 159 and the recession 153b.

Accordingly, the mechanical coupling between the current collecting member 140 and the terminal 150 may be enhanced. That is, the current collecting member 140 may be fixed by the fixing pin 159 to prevent it from separating from the terminal 150. As a result, a state where no gap exists between the terminal 150 and the current collecting member 140 may be maintained.

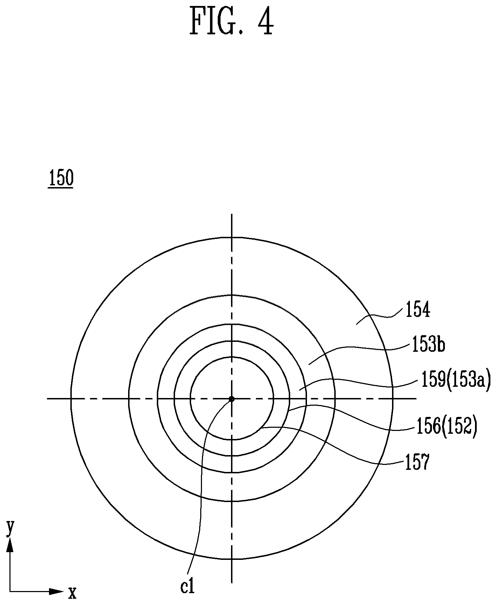

FIG. 4 is a plan view of the terminal according to an embodiment. FIG. 4 shows a plan view of the terminal 150 of FIGS. 2a and 3a in viewing from the top downward.

Referring to FIG. 4, the terminal 150 may include a center portion 152, a center peripheral portion 153a, a recession 153b, and an outer connecting portion 154, disposed in an order extending outward from a center point c1.

The terminal 150 may include a dog point 157, a pin member 156, and a fixing pin 159, disposed in order from the center point c1 outward.

The fixing pin 159 may be disposed to surround the outer end of the pin member 156. The recession 153b may be disposed to surround the outer end of the fixing pin 159. However, FIG. 4 is merely one embodiment, and it should be understood that portions of the fixing pin 159 and the recession 153b may be omitted.

Meanwhile, the battery cell 100 according to this disclosure may be utilized in battery assemblies (not shown), such as a battery module, a battery pack, and an energy storage system. That is, the battery assembly may include the battery cell 100 and a receiving space (not shown) for receiving the battery cell 100. The receiving space may be formed by a housing or frame.

For example, the receiving space may receive a plurality of battery cells 100.

## Claims

1. A battery cell comprising:
a case including a case body forming a receiving space and at least one cap plate;
an electrode assembly received within the receiving space; and
a terminal assembly coupled to the at least one cap plate;
wherein the terminal assembly includes a current collecting member electrically connected to the electrode assembly with a through hole formed therein and a terminal inserted into the through hole and in contact with the current collecting member.

2. The battery cell according to claim 1, wherein the terminal includes a terminal head in contact with the current collecting member and a terminal pin extended from the terminal head toward the cap plate and inserted into the through hole.

3. The battery cell according to claim 2, wherein the terminal further includes a fixing pin disposed on the terminal head along a circumference of the terminal pin.

4. The battery cell according to claim 3, wherein the fixing pin is provided spaced apart from the outside of the terminal pin so as to surround the terminal pin centered on the terminal pin.

5. The battery cell according to claim 3, wherein the fixing pin is disposed in an arc shape centered on the terminal pin in viewing from the cap plate.

6. The battery cell according to claim 3, wherein a diameter of the through hole is equal to or larger than a diameter of a pin structure including the terminal pin and the fixing pin.

7. The battery cell according to claim 3, wherein at least a portion of the terminal head includes a recession that is positioned radially away from the terminal pin than the fixing pin centered on the terminal pins and is recessed away from the cap plate.

8. The battery cell according to claim 7, wherein the recession includes a section in which a vertical length gradually increases toward the outer direction of the terminal head.

9. The battery cell according to claim 3, wherein the current collecting member includes a peripheral portion of the through hole and a plate,
wherein the peripheral portion of the through hole comes into contact with the terminal head when the terminal pin and the fixing pin are inserted into the through hole.

10. The battery cell according to claim 9, further comprising:
a recession positioned radially away from the terminal pin than the fixing pin centered on the terminal pins and recessed away from the cap plate,
wherein the peripheral portion of the through hole is positioned between the fixing pin and the recession.

11. The battery cell according to claim 9, wherein the fixing pin is bent outward to contact with a top of the peripheral portion of the through hole when the terminal pin and the fixing pin are inserted into the through hole.

12. The battery cell according to claim 11, when the terminal pin is inserted into a hole of the pressing portion, wherein the fixing pin is bent outward to contact with the top of the peripheral portion of the through hole due to the pressing of the pressing portion.

13. The battery cell according to claim 12, wherein a diameter of the pressing portion is smaller than a diameter of a pin structure including the terminal pin and the fixing pin, and is equal to or larger than a diameter of the fixing pin.

14. The battery cell according to claim 2, wherein the terminal pin is connected to the center portion of the terminal head.

15. The battery cell according to claim 14, wherein the terminal further includes a fixing pin connected to a center periphery portion of the terminal head, and the fixing pin is bent to contact with the top surface of the current collecting member when the fixing pin and the terminal pin are inserted into the through hole.

16. The battery cell according to claim 15, wherein the terminal head includes a recession connected to the outer end of the center periphery portion and an outer connecting portion connected to the outer end of the recession.

17. The battery cell according to claim 16, wherein a vertical length of the recession is smaller than a vertical length of the outer connecting portion.

18. The battery cell according to claim 2, wherein a diameter of the terminal head is larger than a diameter of the through hole.

19. The battery assembly comprising:
a battery cell of claim 1; and
a receiving space for receiving the battery cell.
